# EUROPEAN PATENT SPECIFICATION

(11) **EP 1 752 718 B1**
(45) Date of publication and mention of the grant of the patent: **21.07.2010**
(21) Application number: 05107265.0
(22) Date of filing: 05.08.2005
(51) Int. Cl.: F24H 1/43, F28D 7/02

(54) **Method of producing a heat exchanger**
Verfahren zur Herstellung eines Wärmetauschers
Méthode de fabrication d'un échangeur de chaleur

(43) Date of publication of application: 14.02.2007
(73) Proprietor: Riello S.p.A., Legnago (IT)
(72) Inventor: Cannas, Christian, 23826 Mandello del Lario (IT)
(74) Representative: Jorio, Paolo

(56) References cited:
- EP-A- 0 678 186
- EP-A- 0 814 312
- WO-A-2004/090434
- FR-A- 2 124 043
- US-A1- 2001 031 440

## Description

The present invention relates to a method of producing a heat exchanger.

More specifically, the present invention relates to a method of producing a heat exchanger for a gas boiler for producing hot water.

A gas boiler for producing hot water normally comprises a gas burner, and at least one heat exchanger through which combustion fumes and water flow. Some types of gas boilers, known as condensation boilers, condense the steam in the combustion fumes and transfer the latent heat in the fumes to the water. Condensation boilers are further divided into a first type, equipped with a first exchanger close to the burner, and a second exchanger for simply condensing the fumes; and a second type, equipped with only one heat exchanger which provides solely for thermal exchange along a first portion, and for both thermal exchange and fume condensation along a second portion. Condensation or dual-function exchangers of the above type normally comprise a casing extending along a first axis and through which combustion fumes flow; and a tube along which water flows, and which extends along a second axis and coils about the first axis to form a succession of turns. The combustion fumes flow over and between the turns to transfer heat to the water flowing along the tube.

EP 0 678 186 discloses a heat exchanger for a gas boiler for producing hot water. The heat exchanger comprises a casing extending along a first axis and through which combustion fumes flow; a tube forming a plurality of tube sections along which water flows; said tube sections being arranged inside said casing so as to forms gaps between adjacent tube sections; guiding means for guiding said fumes though said gaps; and bosses for spacing adjacent tube sections.

Each tube section is provided with a cross section delimited by two parallel, opposite, flat walls. Bosses protrude from one of said flat walls for abutting a flat wall without bosses of an adjacent tube section and forming the above mentioned gaps between adjacent tube sections.

Even though the above described heat exchanger is provided with integrally made spacers, a rather expensive and time-consuming hydro-forming process is needed to form bosses in tube sections. The hydro-forming process is performed by a press that squeezes the tube sections between dies in order to form the flat walls and, at the same time, forms the bosses by injecting inside the tube sections a fluid under high pressure. It follows that hydro-forming process lacks flexibility because a modification of the distributions pitch or the height of the bosses requires different dies.

In addition to that, the process is not extremely accurate and small gaps cannot be formed by embossed tube sections.

Document US2001/0031440 A1 discloses a heat exchanger, which is of the above-identified type and comprises tube walls provided with enlargements for spacing apart the tube sections. However, this document does not disclose how the enlargements are made.

Document WO2004/090434 A1 discloses a heat exchanger, according to the preamble of claim 1 and comprises comb-like spacers, each having a straight portion extending transversely to the tube sections and teeth protruding from straight portion and to be inserted between the tube sections. The heat exchanger needs at least three comb-like spacers that difficult to be assembled to the tube sections.

It is an object of the present invention to provide a method of producing a heat exchanger for a gas boiler for producing hot water, which overcomes the drawbacks of the prior art.

According to the present invention, there is provided a method of producing a heat exchanger for a gas boiler for producing hot water; the heat exchanger comprising a casing extending along a first axis and through which combustion fumes flow; a tube forming a plurality of turns along which water flows; said turns being arranged inside said casing so as to form gaps between adjacent turns; deflecting means for guiding said fumes trough said gaps; and spacing means for spacing adjacent turns apart and forming said gaps; characterized by extruding said tube integrally with a longitudinal rib; and partially machining said rib so as to forms teeth along the length of said tube; said teeth being integral with tube and forming said spacing means.

The method in accordance to the present invention has the advantages of not requiring hydro-forming process and increasing the accuracy.

A number of embodiments of the present invention will be described by way of example with reference to the accompanying drawings, in which:
Figure 1 shows a schematic front view, with parts in section and parts removed for clarity, of a gas boiler equipped with a heat exchanger in accordance with the present invention;
Figure 2 shows a larger-scale section of a detail of the Figure 1 heat exchanger;
Figure 3 shows a view in perspective of a tube used to produce the Figure 1 exchanger; and
Figures 4 and 5 shows variations of the Figure 3 tube.

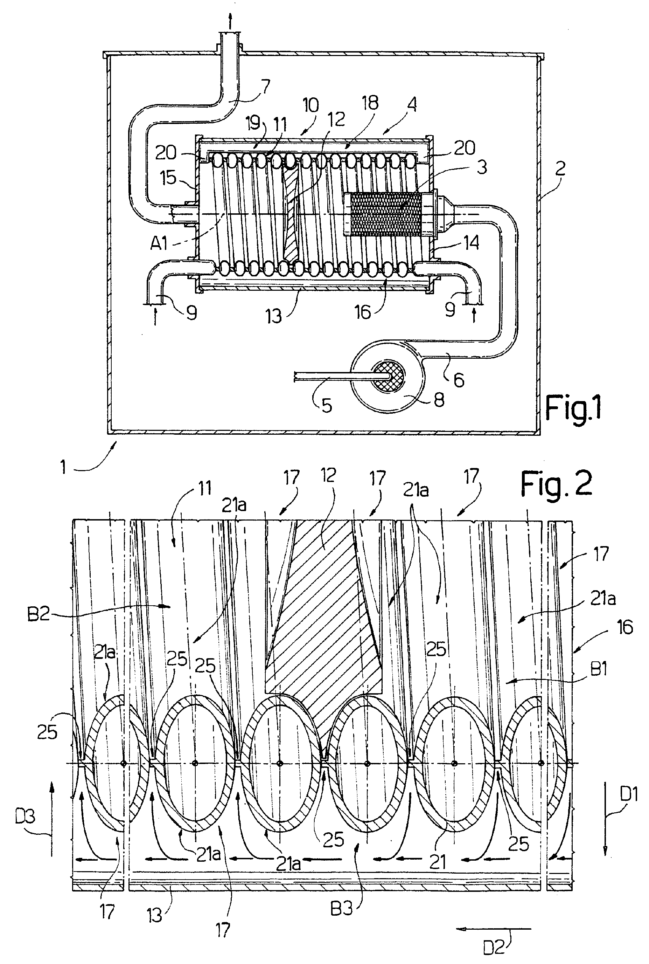

Number 1 in Figure 1 indicates as a whole a gas boiler. Boiler 1 is a wall-mounted condensation boiler, i.e. in which the vapour in the combustion fumes is condensed, and comprises an outer structure 2 in which are housed a burner 3; a heat exchanger 4; a gas supply conduit 5; a pipe 6 for supplying an air-gas mixture to burner 3; a combustion gas exhaust pipe 7; a fan 8 connected to supply pipe 6, and which performs the dual function of supplying the air-gas mixture to burner 3, and expelling the combustion fumes; and a water circuit 9. Burner 3 is connected to pipe 6, is cylindrical in shape, and comprises a lateral wall with holes (not shown) for emitting the air-gas mixture and feeding the flame. Burner 3 is housed inside exchanger 4 which, in fact, also acts as a combustion chamber. Heat exchanger 4 is substantially cylindrical in shape, extends along a substantially horizontal axis A1, and comprises a casing 10, through which the combustion products flow; a tube 11, along which water flows; and a disk 12 for directing the fumes along a given path inside exchanger 4. Casing 10 comprises a cylindrical lateral wall 13 about axis A1; an annular wall 14 connected to lateral wall 13, to supply pipe 6, and to burner 3; and an annular wall 15 connected to lateral wall 13 and to exhaust pipe 7. Burner 3 extends, coaxially with exchanger 4, inside of exchanger 4 for a given length. Tube 11 coils about axis A1 to form a helix 16 comprising a succession of adjacent turns 17, each located close to lateral wall 13, and has two opposite ends with known fittings (not shown) for connecting tube 11 to water circuit 9 outside exchanger 4. Disk 12 is shaped so as to fit with the shape of the coiled tube 11.

Exchanger 4 comprises three spacers 18 for keeping turns 17 a given distance from lateral wall 13. Each spacer 18 comprises a straight portion 19 parallel to axis A1, and from which project fingers 20 for clamping the helix 16.
With reference to figure 2, tube 11, disk 12, and spacers 18 define, inside casing 11, a region B1 housing burner 3; a region B2 communicating directly with exhaust pipe 7; and three regions B3, each extending between two spacers 18, turns 17, and lateral wall 13. Combustion of the air-gas mixture takes place in region B1; and the resulting fumes, being prevented by disk 12 from flowing directly to region B2, flow between turns 17, in a direction D1 substantially perpendicular to axis A1, to regions B3, along which they flow in a direction D2 substantially parallel to axis A1. On reaching regions B3, the fumes flow between turns 17 in direction D3 opposite to D1 to region B2 and then along exhaust pipe 7.

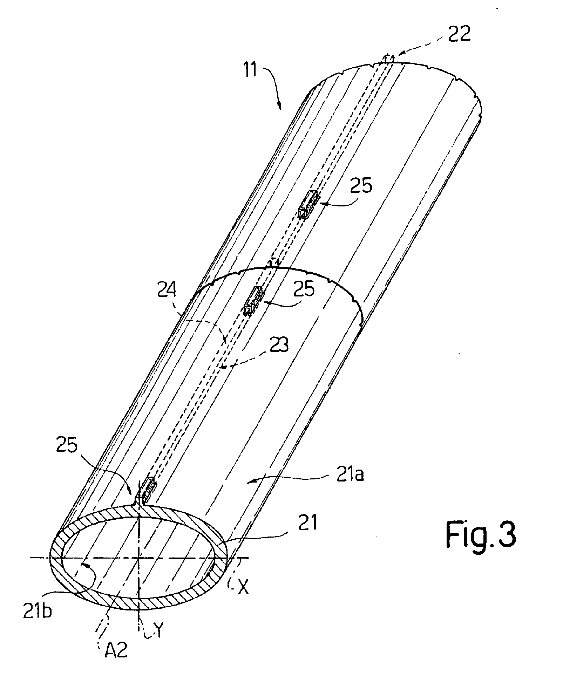

Tube 11 is preferably made of aluminium or aluminium-based alloy. With reference to Figure 3, tube 11 is an extruded tube, which extends along an axis A2, and comprises a wall 21 with an oval cross-section (major axis X and a minor axis Y) and a longitudinal rib 22 shown partially in dotted lines in figure 3. Wall 21 has an outer surface 21a and an inner surface 21b and a constant thickness. Rib 22 protrudes from the outer surface 21a at the intersection of outer surface 21a and minor axis Y and has two lateral faces 23 substantially parallel to minor axis Y and a distal face 24 substantially parallel to major axis X. In other words, rib 22 protrudes from the area of the cross section having the largest radius.

After extrusion, rib 22 is partially machined in order to separate teeth 25, which, in the preferred embodiment, are equally distributed along the length of the tube 11. Each tooth 25 has a cross-section corresponding to the cross-section of rib 22.

In an alternative embodiment, not shown, the cross-section of teeth 25 is modified by reducing the height of the teeth 25 by machining.

As an example of the sizes of the teeth 25 and of the tube 11, tube 11 may have an axis Y 20 mm high and teeth 0,8 mm high per 1,1 mm wide. The ratio between the height of the tube 11 and the height of the teeth 25 is roughly about 23.

Once the rib 22 is machined, tube 11 is coiled about axis A1, so that axis A2 of tube 14 also assumes a helical shape. Tube 11 is coiled with a constant pitch and radius, so that each turn 17 faces an adjacent turn 17. This operation actually comprises calendering tube 11, with the minor axis Y of the section of tube 11 maintained substantially parallel to axis A1. The three spacers 18 are then fitted to helix 16, and arranged 120 degrees apart, so as to compress turns 17 along axis 1.

Then, teeth 25 of a given turn 17 comes into contact with the outer surface 21a of the adjacent turn 17 so as to form a gap between the two adjacent turns 17.

With reference to figure 2, the fumes flow from region B1 to regions B3 in direction D1 towards wall 13, then flow in direction D2 between turns 17 and wall 13, flow between turns 17 in direction D3 from regions B3 to region B2, and are finally expelled by exhaust pipe 7. The successive gaps therefore define compulsory fume paths.

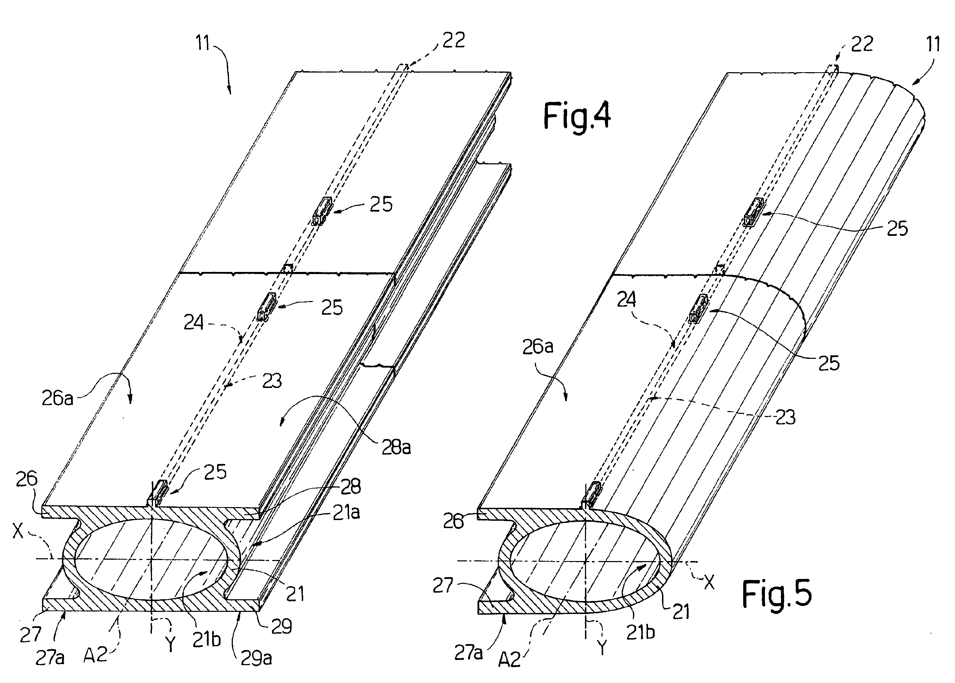

With reference to the Figure 4 variation, tube 11 is provided with four fins 26, 27, 28, and 29 tangent to wall 21 and parallel to each other and to major axis X. Fins 26 and 27 are located on the same side of tube 11, whereas fins 28 and 29 are located on the opposite side. Then, fin 26 is coplanar to fin 28 and fin 27 is coplanar to fin 29. Fins 26, 27, 28 and 29 have a surface 26a, 27a, 28a, and 29a, which is tangent to outer surface 21a of wall 21 so that surfaces 26a and 28a form a single surface from which teeth 25 protrude. Surfaces 27a and 29a form a single surface without any protruding teeth 25. Once tube 11 is coiled in a helix 16 and clamped by spacers 18, teeth abut against the single surface formed by surfaces 27a and 29a.

With reference to the figure 5 variation, tube 11 is provided with fins 26 and 27, fins 28 and 29 being omitted.

Many other variations in shape of tube 11 cross-section and arrangement of the fins are possible without departing from the scope of the present invention as defined by the claims.

Exchanger 4 as described above may also be used in condensation boilers comprising a main exchanger, and in which exchanger 4 provides solely for condensing the fumes, as opposed to acting as a combustion chamber as in the example described.

Exchanger 4 as described above has numerous advantages, by combining straightforward construction as a result of teeth 25 formed directly by the tube 11 extrusion process and extremely flexible machining operation.

Even though the embodiment disclosed in the detailed description refers to a tube 11 coiled in a helix 16 to form a plurality of turns, the invention is not limited to this embodiment and turns 17 should be intended more generally as adjacent tube sections.

## Claims

1. A method of producing a heat exchanger for a gas boiler for producing hot water; the heat exchanger (4) comprising a casing (10) extending along a first axis (A1) and through which combustion fumes flow; a tube (11) forming a plurality of turns (17) along which water flows; said turns (17) being arranged inside said casing (10) so as to form gaps between adjacent turns (17); deflecting means (12) for guiding said fumes trough said gaps; and spacing means for spacing adjacent turns (17) apart and forming said gaps; **characterized by** extruding said tube (11) integrally with a longitudinal rib (22); and partially machining said rib (22) so as to form teeth (25) along the length of said tube (11); said teeth (25) being integral with tube (11) and forming said spacing means.

2. A method as claimed in Claim 1, **characterised in that** integral rib and consequently said machined teeth (25) are substantially radial with respect to said tube (11).

3. A method as claimed in Claim 1 or 2, **characterized in that** said teeth (25) are machined to be evenly distributed along the length of each tube (11).

4. A method as claimed in any one of the foregoing Claims, **characterized in that** said tube (11) is finned.

5. A method as claimed in any one of the foregoing Claims, **characterized in that** said tube (11) with said teeth is coiled in a helix (16) comprising a plurality of turns (17).

6. A method as claimed in any one of the foregoing Claims, **characterized in that** each tooth (25) of turns (17) has a distal face (24) substantially flat suitable to abut against the outer surface (21a) of an adjacent turns (17).

7. A method as claimed in Claim 1, **characterized in that** said tube (11) has an oval shaped cross section; each tooth (25) protruding from the portion of the tube (11) having the largest radius.

8. A method as claimed in any one of the foregoing claims, **characterized in that** said teeth (25) have a cross section equal to the cross section of said rib (22).

9. A method as claimed in any one of the claims from 4 to 8, **characterised by** co-extruding fins (28, 27, 28, 29; 26, 27) with said rib (25) and said tube (11).

## Patentansprüche

1. Verfahren zum Herstellen eines Wärmetauschers für einen Gasboiler zum Erzeugen von Warmwasser, wobei der Wärmetauscher (4) umfasst:
ein Gehäuse (10), das sich entlang einer ersten Achse (A1) erstreckt und durch das Verbrennungsdünste strömen,
ein Rohr (11), das eine Vielzahl von Windungen (17) ausbildet, entlang denen Wasser strömt, wobei die Windungen (17) innerhalb des Gehäuses (10) angeordnet sind, damit sie Lücken zwischen benachbarten Windungen (17) ausbilden,
ein Ablenkmittel (12) zum Führen der Dünste durch die Lücken, und
ein Abstandmittel zum Beabstanden benachbarter Windungen (17) voneinander und zum Ausbilden der Lücken,
**gekennzeichnet durch** Extrudieren des Rohrs (11) integral mit einer Längsrippe (22), und
teilweise Bearbeiten der Rippe (22), um Zähne (25) entlang der Länge des Rohrs (11) auszubilden, wobei die Zähne (25) integral mit dem Rohr (11) sind und die Abstandsmittel ausbilden.

2. Verfahren gemäß Anspruch 1, **dadurch gekennzeichnet, dass** die integrale Rippe und folglich die bearbeiteten Zähne (25) im Wesentlich radial zum Rohr (11) gelegen sind.

3. Verfahren gemäß Anspruch 1 oder 2, **dadurch gekennzeichnet, dass** die Zähne (25) bearbeitet werden, damit sie entlang der Länge jedes Rohrs (11) gleichmäßig verteilt sind.

4. Verfahren gemäß einem der vorangegangenen Ansprüche, **dadurch gekennzeichnet, dass** das Rohr (11) mit Finnen ausgestattet ist.

5. Verfahren gemäß einem der vorangegangenen Ansprüche, **dadurch gekennzeichnet, dass** das Rohr (11) mit den Zähnen in einer eine Vielzahl von Windungen (17) umfassenden Helix gespult ist.

6. Verfahren gemäß einem der vorangegangenen Ansprüche, **dadurch gekennzeichnet, dass** jeder Zahn (25) der Windungen (17) eine im Wesentlichen flache, distale Fläche (24) aufweist, die gegen die Außenfläche (21a) einer benachbarten Windung (17) anliegen kann.

7. Verfahren gemäß Anspruch 1, **dadurch gekennzeichnet, dass** das Rohr (11) einen oval-förmigen Querschnitt aufweist, wobei jeder Zahn (25) von dem den größten Radius aufweisenden Abschnitt des Rohrs (11) hervorsteht.

8. Verfahren gemäß einem der vorangegangenen Ansprüche, **dadurch gekennzeichnet, dass** die Zähne (25) einen Querschnitt gleich dem Querschnitt der Rippe (22) aufweisen.

9. Verfahren gemäß einem der vorangegangenen Ansprüche 4 bis 8, **gekennzeichnet durch** Ko-Extrudieren von Finnen (28, 27, 28, 29; 26, 27) mit der Rippe (25) und dem Rohr (11) .

## Revendications

1. Procédé pour produire un échangeur de chaleur pour une chaudière à gaz afin de produire de l'eau chaude ; l'échangeur de chaleur (4) comprenant un boîtier (10) s'étendant le long d'un premier axe (A1) et à travers lequel les fumées de combustion s'écoulent ; un tube (11) formant une pluralité de spires (17) le long desquelles l'eau s'écoule ; lesdites spires (17) étant agencées à l'intérieur dudit boîtier (10) afin de former des espaces entre les spires (17) adjacentes ; des moyens de déflexion (12) pour guider lesdites fumées à travers lesdits espaces ; et des moyens d'espacement pour espacer les spires (17) adjacentes et former lesdits espaces ; **caractérisé par** l'étape consistant à extruder ledit tube (11) de manière solidaire à une nervure longitudinale (22) ; et usiner partiellement ladite nervure (22) afin de former des dents (25) le long de la longueur dudit tube (11) ; lesdites dents (25) étant solidaires du tube (11) et formant lesdits moyens d'espacement.

2. Procédé selon la revendication 1, **caractérisé en ce que** ladite nervure solidaire et par conséquent lesdites dents usinées (25) sont sensiblement radiales par rapport audit tube (11).

3. Procédé selon la revendication 1 ou 2, **caractérisé en ce que** lesdites dents (25) sont usinées pour être régulièrement réparties le long de la longueur de chaque tube (11).

4. Procédé selon l'une quelconque des revendications précédentes, **caractérisé en ce que** ledit tube (11) est pourvu d'ailettes.

5. Procédé selon l'une quelconque des revendications précédentes, **caractérisé en ce que** ledit tube (11) avec lesdites dents, est enroulé en une hélice (16) comprenant une pluralité de spires (17).

6. Procédé selon l'une quelconque des revendications précédentes, **caractérisé en ce que** chaque dent (25) des spires (17) a une face distale (24) sensiblement plate, appropriée pour venir en butée contre la surface externe (21a) d'une spire (17) adjacente.

7. Procédé selon la revendication 1, **caractérisé en ce que** ledit tube (11) a une section transversale ovale ; chaque dent (25) faisant saillie de la partie du tube (11) ayant le plus grand rayon.

8. Procédé selon l'une quelconque des revendications précédentes, **caractérisé en ce que** lesdites dents (25) ont une section transversale égale à la section transversale de ladite nervure (22).

9. Procédé selon l'une quelconque des revendications 4 à 8, **caractérisé par** l'étape consistant à co-extruder des ailettes (28, 27, 28, 29 ; 26, 27) avec ladite nervure (25) et ledit tube (11).
